# NEUE EUROPÄISCHE PATENTSCHRIFT

(11) **EP 1 570 168 B2**
(45) Veröffentlichungstag und Bekanntmachung des Hinweises auf die Entscheidung über den Einspruch: **29.01.2020**
(45) Hinweis auf die Patenterteilung: 31.10.2012
(21) Anmeldenummer: 03767518.8
(22) Anmeldetag: 03.11.2003
(51) Int. Cl.: F02M 25/07, F02B 29/04

(54) **VORRICHTUNG ZUR KÜHLUNG**
COOLING DEVICE
DISPOSITIF DE REFROIDISSEMENT

(30) Priorität: 03.12.2002 DE 10256611
(43) Veröffentlichungstag der Anmeldung: 07.09.2005
(73) Patentinhaber: MAHLE Behr GmbH & Co. KG, 70469 Stuttgart (DE)
(72) Erfinder: EITEL, Jochen, 73266 Bissingen (DE); HENDRIX, Daniel, 70736 Fellbach (DE); KRAMER, Wolfgang, 35041 Marburg (DE); LUTZ, Rainer, 71711 Steinheim (DE)
(74) Vertreter: Grauel, Andreas
(86) Internationale Anmeldenummer: PCT/EP2003/012223
(87) Internationale Veröffentlichungsnummer: WO 2004/051069

(56) Entgegenhaltungen:
- EP-A- 1 031 722
- EP-A- 1 091 113
- DE-A- 19 853 455
- DE-C- 4 331 509
- JP-A- H11 200 955
- JP-A- 2002 188 526
- US-A- 5 617 726
- US-A1- 2001 045 090
- US-A1- 2002 026 926
- US-B1- 6 427 436

## Beschreibung

Die Erfindung betrifft eine Vorrichtung zur Kühlung von Ladeluft und Abgas insbesondere eines Kraftfahrzeuges mit Verbrennungskraftmaschine.

Gemäß dem Stand der Technik werden zur Leistungssteigerung von Motoren Turbolader oder andere mechnanische Aufladesysteme, wie Kompressoren oder ähnliches, verwendet, um die der Verbrennung zuzuführende Luft oder die Ladeluft zu verdichten. Das dabei durch den Verdichtungsvorgang erwärmte Fluid, Gas oder Medium, wie insbesondere Luft, wird dabei in der Regel durch einen Ladeluftkühler anschließend gekühlt. Dies erfolgt auch, um die Luftdichte weiter zu erhöhen und die Verbrennungsspitzentemperaturen zu begrenzen. Die Ladeluft strömt dabei durch einen Wärmetauscher, der beispielsweise von Umgebungsluft oder von einem Kühlmedium durchströmt und damit gekühlt wird. Dadurch ist eine Abkühlung der Ladeluft auf eine Temperatur möglich, die etwa 20-90 K über der Temperatur der Umgebungsluft oder dieser möglichst nahe liegt.

Bei Vorrichtungen mit Abgasrückführung wird das Abgas in einem eigenen Wärmeübertrager gekühlt und anschließend der abgekühlten Ladeluft zugemischt oder zugeführt. Typischerweise ergibt sich gegenüber der Ladelufttemperatur am Ausgang des Ladeluftkühlers eine erhöhte Temperatur des Abgas-Ladeluftgemischs.

Hinsichtlich der zukünftig steigenden Anforderungen bezüglich reduzierter Emissionen, insbesondere NOx und reduzierten Verbrauchs ergibt sich dadurch ein deutlicher Nachteil.

Die EP 1091113 A2 offenbart eine Vorrichtung zur Kühlung von Ladeluft und Abgas insbesondere eines Kraftfahrzeuges mit Verbrennungskraftmaschine, mit einem rückgeführten Abgasstrom und einem Ladeluftstrom, wobei der Abgasstrom mittels eines ersten und eines zweiten Wärmeübertragers gekühlt wird, der Ladeluftstrom mittels eines dritten Wärmeübertragers gekühlt wird, bevor der derart gekühlte Abgasstrom und Ladeluftstrom zusammengeführt wird. Dabei wird das Abgas zuerst von einem ersten Kühlmittel abgekühlt, bevor es mit dem Motorkühlwasser weiter abgekühlt wird. Dadurch erreicht man keine niedrigen Abgastemperaturen, weil es nicht unter die Motorkühlwassertemperatur gekühlt werden kann.

Aufgabe der Erfindung ist es, eine Vorrichtung zu schaffen, bei welcher die Temperatur des Abgas-Ladeluftgemischs gegenüber bekannten Vorrichtungen reduziert ist.

Diese Aufgabe wird erfindungsgemäß gelöst durch eine Vorrichtung zur Kühlung von Ladeluft und Abgas insbesondere eines Kraftfahrzeuges mit Verbrennungskraftmaschine, mit einem rückgeführten Abgasstrom und einem Ladeluftstrom, wobei der Abgasstrom mittels eines ersten und eines zweiten Wärmeübertragers gekühlt wird, der Ladeluftstrom mittels eines dritten Wärmeübertragers gekühlt wird, bevor der derart gekühlte Abgasstrom und Ladeluftstrom zusammengeführt wird, wobei das Abgas in dem ersten Wärmeübertrager mittels Motorkühlwasser als Kühlmedium abgekühlt wird und der zweite Wärmeübertrager Kältemittel verwendet, um das Abgas weiter abzukühlen.

Dabei ist es vorteilhaft, wenn der rückgeführte Abgasstrom mittel eines Ventils steuerbar ist. Ein solches Ventil kann vorzugsweise ein Tellerventil sein. Bei anderen Ausführungsbeispielen der Erfindung kann jedoch auch ein anderer Ventiltyp eingesetzt werden.

Weiterhin kann es zweckmäßig sein, wenn der erste Wärmeübertrager und der zweite Wärmeübertrager als getrennte Wärmeübertrager ausgebildet sind. Bei einem weiteren Ausführungsbeispiel ist es zweckmäßig, wenn der erste Wärmeübertrager und der zweite Wärmeübertrager als getrennte Wärmeübertrager als Baueinheit ausgebildet sind. Bei einem weiteren Ausführungsbeispiel ist es weiterhin zweckmäßig, wenn der erste und/oder zweite und/oder dritte Wärmeübertrager als Baueinheit ausgebildet sind.

Erfindungsgemäß ist es zweckmäßig, wenn zumindest einer der Wärmeübertrager mittels eines ersten Kühlmittel gekühlt wird, wie Luft, Kühlmittel, wie Kühlwasser mit oder ohne Zusätze, Kältemittel eines Kältemittelkreislaufes insbesondere einer Klimaanlage.

Im Folgenden wird die Erfindung anhand einiger Ausführungsbeispiele unter Bezugnahme auf die Zeichnung im Einzelnen erläutert. In der Zeichnung zeigen:
- Fig. 1: eine erfindungsgemäße Vorrichtung gemäß einem ersten Ausführungsbeispiel;
- Fig. 2: eine Vorrichtung gemäß einem nicht erfindungsgemäßen Beispiel;
- Fig. 3: eine Vorrichtung gemäß einem nicht erfindungsgemäßen Beispiel.

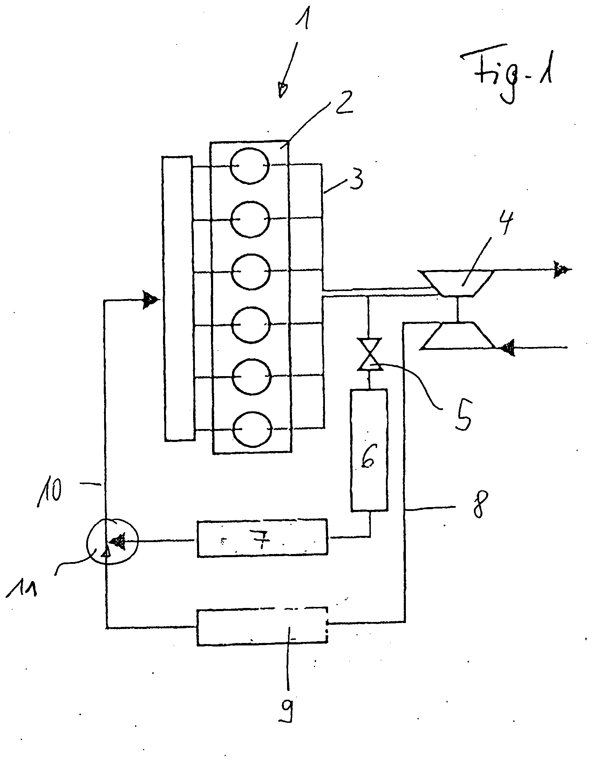

Fig. 1 zeigt eine Vorrichtung 1 zur Kühlung von Fluiden, wie insbesondere zur Kühlung von Abgas und Ladeluft. Dabei wird das Abgas des Verbrennungsmotors 2 durch die Leitungen 3 abgeleitet und beispielsweise über eine Turbine 4 geleitet. Ein Teil des Abgasstroms wird über ein Ventil 5 rückgeführt. Dabei wird das rückgeführte Abgas von einem ersten Wärmeübertrager 6 gekühlt. Es erreicht am Austritt eine erste Temperatur T1. Anschlie-βend wird das auf T1 abgekühlte Abgas von einem zweiten Wärmeübertrager auf die Temperatur T2 abgekühlt.

Mittels des Elementes 4 wird die Ladeluft verdichtet. Die verdichtete Ladeluft wird mittels der Leitungen 8 einem dritten Wärmeübertrager 9 zugeführt, welcher die Ladeluft auf eine Temperatur T3 abkühlt. Nach dem Austritt aus dem dritten Wärmeübertrager wird die gekühlte Ladeluft mit dem zweifach gekühlten Abgas gemischt und mittels der Leitung 10 dem Motor 2 wieder zugeführt.

Vorteilhaft ist es, wenn das Abgas in dem ersten Wärmetauscher mittels Motorkühlwasser als Kühlmedium abgekühlt wird. Der zweite Wärmeübertrager 7 kann dann als Kühlmedium Luft, ein Niedertemperaturkühlmittel oder ein Kältemittel verwenden, um das Abgas weiter abzukühlen. Das Niedertemperaturkühlmittel ist dabei ein Kühlmittel, dessn Temperatur niedriger ist als des Motorkühlwasser bei der Anwendung im ersten Wärmeübertrager.

Die beiden Wärmeübertrager 6 und 7 können dabei als getrennt ausgebildete Wärmeübertrager ausgebildet sein oder als Baueinheit ausgebildet sein. Auch einer der beiden Wärmeübertrager 6 oder 7 oder beide können mit dem dritten Wärmeübertrager 9 als Baueinheit ausgebildet sein. Er kann aber auch als separater Wärmeübertrager ausgebildet sein.

Bei kombinierten Wärmeübertragern als Baueinheit sind die Fluidkanäle für Abgas und Ladeluft getrennt geführt und gekühlt.

Vorzugsweise ist der Wärmeübertrager 7 motorfest angeordnet oder in einem Kühlmodul angeordnet oder integriert, bei welchem verschiedene Kühler oder Wärmeübertrager zusammengefaßt sind.

Vorzugsweise werden Ladeluft und Abgas in einer Mischkammer 11 gemischt, die auch gekühlt werden kann. Dazu kann die Mischkammer Teil eines Moduls oder eines Wärmeübertragers sein.

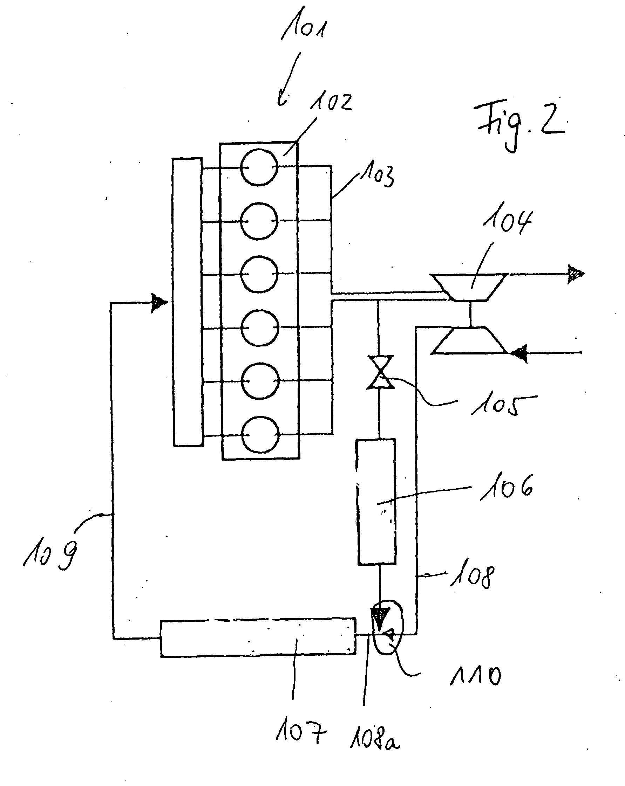

Die Fig. 2 zeigt eine nicht erfindungsgemäße Vorrichtung 101 zur Kühlung von Fluiden, wie insbesondere zur Kühlung von Abgas und Ladeluft. Dabei wird das Abgas des Verbrennungsmotors 102 durch die Leitungen 103 abgeleitet und beispielsweise über eine Turbine 104 oder ähnliches geleitet. Ein Teil des Abgasstroms wird über ein Ventil 105 dem Motor 102 zurückgeführt. Dabei wird das zurückgeführte Abgas von einem ersten Wärmeübertrager 106 gekühlt. Es erreicht am Austritt eine erste Temperatur T1. Anschließend wird das auf T1 abgekühlte Abgas mit der verdichteten Ladeluft aus Leitung 108 vermischt.

Die mit Abgas vermischte Ladeluft wird mittels der Leitungen 108a einem zweiten Wärmeübertrager 107 zugeführt, welcher die Mischung Abgas/Ladeluft auf eine Temperatur T2 abkühlt. Nach dem Austritt aus dem zweiten Wärmeübertrager 107 wird die gekühlte Abgas/Ladeluft-Mischung mittels der Leitung 109 dem Motor 102 wieder zugeführt.

Vorteilhaft ist es, wenn das Abgas in dem ersten Wärmetauscher 106 mittels Motorkühlwasser als Kühlmedium abgekühlt wird. Der zweite Wärmeübertrager 107 kann dann als Kühlmedium Motorkühlwasser, Luft, ein Niedertemperaturkühlmittel oder ein Kältemittel verwenden, um das Abgas/Ladeluft-Gemisch weiter abzukühlen. Das Niedertemperaturkühlmittel ist dabei ein Kühlmittel, dessen Temperatur niedriger ist als des Motorkühlwassers bei der Anwendung im ersten Wärmeübertrager.

Die beiden Wärmeübertrager 106 und 107 können dabei als getrennt ausgebildete Wärmeübertrager ausgebildet sein oder als Baueinheit ausgebildet sein. Im Falle der Baueinheit können die Kühler oder Wärmeübertrager derart ausgebildet sein, daß die Medien, insbesondere Abgas und Ladeluft in unterschiedlichen Fluidkanälen geführt sind.

Vorzugsweise werden Ladeluft und Abgas in einer Mischkammer 110 gemischt, die auch gekühlt werden kann. Dazu kann die Mischkammer Teil eines Moduls oder eines Wärmeübertragers sein.

Vorzugsweise ist der Wärmeübertrager 106 und/oder 107 motorfest angeordnet oder in einem Kühlmodul angeordnet oder integriert, bei welchem verschiedene Kühler oder Wärmeübertrager zusammengefaßt sind.

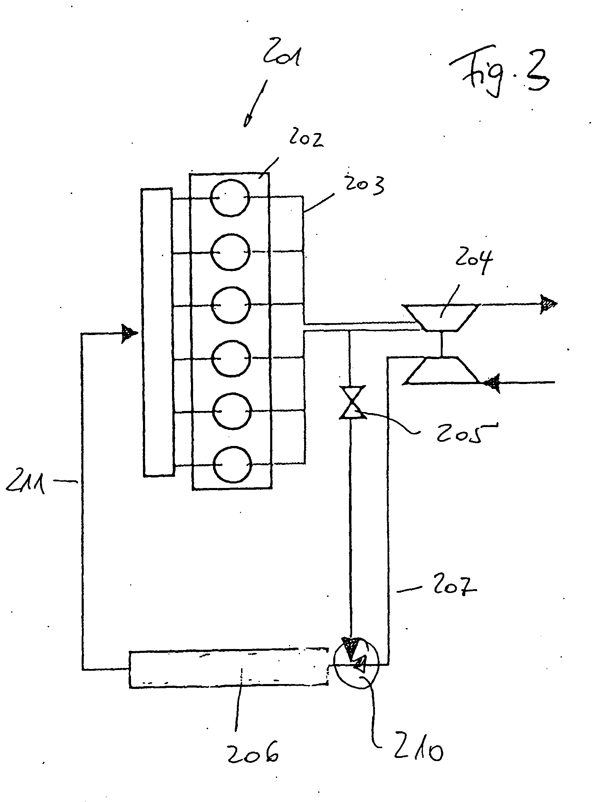

Fig. 3 zeigt eine nicht erfindungsgemäße Vorrichtung 201 zur Kühlung von Fluiden, wie insbesondere zur Kühlung von Abgas und Ladeluft. Dabei wird das Abgas des Verbrennungsmotors 202 durch die Leitungen 203 abgeleitet und beispielsweise über eine Turbine 204 geleitet. Ein Teil des Abgasstroms wird über ein Ventil 205 dem Motor 202 zurückgeführt. Dabei wird das zurückgeführte Abgas vor dem Wärmeübertrager 206 mit der verdichteten Ladeluft aus Leitung 207 vermischt.

Mittels des Elementes 204 wird die Ladeluft verdichtet. Die verdichtete Ladeluft wird mittels der Leitungen 207 einer Mischkammer 210 zugeführt, in welcher die Ladeluft und das zurückgeführte Abgas vermischt wird. Vorteilhaft kann die Mischkammer 210 gekühlt ausgebildet sein.

Dazu kann die Mischkammer Teil eines Moduls oder eines Wärmeübertragers sein.

Das gemischte Abgas/Ladeluft-Gemisch wird mittels des Wärmeübertragers 206 auf die Temperatur T gekühlt.

Nach dem Austritt aus dem Wärmeübertrager 206 wird das gekühlte Abgas/Ladeluft-Gemisch mittels der Leitung 211 dem Motor 202 wieder zugeführt.

Vorteilhaft ist es, wenn der erste Wärmeübertrager mittels Motorkühlwasser, Luft, einem Niedertemperaturkühlmittel oder einem Kältemittel betrieben und versorgt wird, um das Abgas/Ladeluft-Gemisch abzukühlen. Das Niedertemperaturkühlmittel ist dabei ein Kühlmittel, dessen Temperatur niedriger ist als das Motorkühlwasser bei der Anwendung im ersten Wärmeübertrager. Auch können mehrere der genannten Kühlmittel in einem Wärmeübertrager verwendbar sein, um die Temperatur T des Abgas/Ladeluft-Gemischs möglichst weit abzukühlen. Dazu sind getrennte Kreisläufe der Kühlmittel in dem Wärmeübertrager vorgesehen.

Vorzugsweise ist der Wärmeübertrager 206 motorfest angeordnet oder in einem Kühlmodul angeordnet oder integriert, bei welchem verschiedene Kühler oder Wärmeübertrager zusammengefaßt sind.

Bei den genannten Ausführungsbeispielen wird das Abgas vor der Turbine zurückgeführt, das heißt, das Abgas wird vor der Turbine abgegriffen und teilweise zurückgeführt. Bei entsprechenden Ausführungsbeispielen kann das Abgas auch von der Niederdruckseite der Turbine abgegriffen und zurückgeführt werden.

Vorzugsweise kann das Abgas und die Ladeluft bei Ausführungsbeispielen mit getrennter Durchströmung der Wärmeübertrager nach dem Wärmeübertrager gemischt werden.

Bei Durchströmung eines Wärmeübertragers für Abgas und Ladeluft kann die Mischung vor dem Eingang in den Wärmeübertrager oder in dessen Eingangskammer erfolgen. Auch kann die Mischung am Ende des Wärmeübertragers an seiner Endkammer oder außerhalb des Wärmeübertragers erfolgen.

Die Erfindung ist nicht nur auf die Vorrichtung in den oben genannten Ausführungsbeispielen beschränkt. Auch können einzelne Merkmale der Ausführungsbeispiele miteinander kombiniert werden, wie in den beigefügten Ansprüchen beansprucht.

## Patentansprüche

1. Vorrichtung (1) zur Kühlung von Ladeluft und Abgas insbesondere eines Kraftfahrzeuges mit Verbrennungskraftmaschine (2), mit einem rückgeführten Abgasstrom und einem Ladeluftstrom, wobei der Abgasstrom mittels eines ersten (6) und eines zweiten (7) Wärmeübertragers gekühlt wird, der Ladeluftstrom mittels eines dritten Wärmeübertragers (9) gekühlt wird, bevor der derart gekühlte Abgasstrom und Ladeluftstrom zusammengeführt wird, **dadurch gekennzeichnet, dass** das Abgas in dem ersten Wärmeübertrager (6) mittels Motorkühlwasser als Kühlmedium abgekühlt wird und der zweite Wärmeübertrager (7) Kältemittel verwendet, um das Abgas weiter abzukühlen.

2. Vorrichtung nach Anspruch 1, **dadurch gekennzeichnet, dass** der rückgeführte Abgasstrom mittels eines Ventils (5) steuerbar ist.

3. Vorrichtung nach Anspruch 1 oder 2, **dadurch gekennzeichnet, dass** der erste Wärmeübertrager (6) und der zweite Wärmeübertrager (7) als getrennte Wärmeübertrager ausgebildet sind.

4. Vorrichtung nach Anspruch 1 oder 2, **dadurch gekennzeichnet, dass** der erste Wärmeübertrager (6) und der zweite Wärmeübertrager (7) als getrennte Wärmeübertrager als Baueinheit ausgebildet sind.

5. Vorrichtung nach einem der Ansprüche 1, 2, 3 oder 4, **dadurch gekennzeichnet, dass** der erste und/oder zweite und/oder dritte Wärmeübertrager als Baueinheit ausgebildet sind.

## Claims

1. A device (1) for cooling charge air and exhaust gas in particular of a motor vehicle with an internal combustion engine (2), with a recirculated exhaust gas flow and a charge air flow, wherein the exhaust gas flow is cooled by means of a first (6) and a second (7) heat exchanger and the charge air flow is cooled by means of a third heat exchanger (9) before the exhaust gas flow and the charge air flow thus cooled are combined, **characterized in that** the exhaust gas is cooled in the first heat exchanger (6) by means of engine cooling water as the coolant and the second heat exchanger (7) uses refrigerant so as to further cool the exhaust gas.

2. The device according to claim 1, **characterized in that** the recirculated exhaust gas flow can be controlled by means of a valve (5).

3. The device according to claim 1 or 2, **characterized in that** the first heat exchanger (6) and the second heat exchanger (7) are designed as separate heat exchangers.

4. The device according to claim 1 or 2, **characterized in that** the first heat exchanger (6) and the second heat exchanger (7) are designed as separate heat exchangers as a structural unit.

5. The device according to any one of claims 1, 2, 3 or 4, **characterized in that** the first and/or the second and/or the third heat exchanger are designed as a structural unit.

## Revendications

1. Dispositif (1) servant au refroidissement d'air de suralimentation et de gaz d'échappement, en particulier d'un véhicule automobile équipé d'un moteur à combustion interne (2), comportant un flux de gaz d'échappement recyclés et un flux d'air de suralimentation, où le flux de gaz d'échappement est refroidi au moyen d'un premier (6) et d'un deuxième (7) échangeurs de chaleur, le flux d'air de suralimentation étant refroidi au moyen d'un troisième échangeur de chaleur (9), avant que le flux de gaz d'échappement et flux d'air de suralimentation ainsi refroidis soient réunis, **caractérisé en ce que** les gaz d'échappement sont refroidis dans le premier échangeur de chaleur (6) au moyen de l'eau de refroidissement du moteur servant de liquide de refroidissement, et le deuxième échangeur de chaleur (7) utilise du fluide frigorigène pour continuer à refroidir les gaz d'échappement.

2. Dispositif selon la revendication 1, **caractérisé en ce que** le flux de gaz d'échappement recyclés peut être régulé au moyen d'une soupape (5).

3. Dispositif selon la revendication 1 ou 2, **caractérisé en ce que** le premier échangeur de chaleur (6) et le deuxième échangeur de chaleur (7) sont conçus comme des échangeurs de chaleur distincts.

4. Dispositif selon la revendication 1 ou 2, **caractérisé en ce que** le premier échangeur de chaleur (6) et le deuxième échangeur de chaleur (7), en tant qu'échangeurs de chaleur distincts, sont conçus comme un ensemble unitaire.

5. Dispositif selon l'une quelconque des revendications 1, 2, 3 ou 4, **caractérisé en ce que** le premier et / ou le deuxième et / ou le troisième échangeurs de chaleur sont conçus comme un ensemble unitaire.
